Europäisches Patentamt

European Patent Office

Office européen des brevets

(11) Veröffentlichungsnummer : **0 089 945**
**B1**

(12) # EUROPÄISCHE PATENTSCHRIFT

(45) Veröffentlichungstag der Patentschrift :
26.06.85

(21) Anmeldenummer : 83890032.2

(22) Anmeldetag : 08.03.83

(51) Int. Cl.⁴ : **B 21 F 27/10, B 65 G 57/081**

(54) **Verfahren zum Herstellen und Stapeln von Bewehrungsmatten für Stahlbeton.**

(30) Priorität : 23.03.82 AT 1133/82

(43) Veröffentlichungstag der Anmeldung :
28.09.83 Patentblatt 83/39

(45) Bekanntmachung des Hinweises auf die Patenterteilung : 26.06.85 Patentblatt 85/26

(84) Benannte Vertragsstaaten :
BE DE FR GB IT NL SE

(56) Entgegenhaltungen :
DE-A- 2 938 974
DE-B- 1 917 852
DE-B- 2 060 219
US-A- 2 278 104

(73) Patentinhaber : AVI Alpenländische Verede-
lungs-Industrie Gesellschaft m.b.H.
Vinzenz-Muchitsch-Strasse 36,
A-8011 Graz (AT)

(72) Erfinder : Ritter, Gerhard, Dipl.-Ing. Dr.
Unterer Plattenweg 47
A-8043 Graz (AT)
Erfinder : Ritter, Klaus, Dipl.-Ing.
Peterstalstrasse 157
A-8042 Graz (AT)

(74) Vertreter : Holzer, Walter, Dipl.-Ing. et al
Patentanwälte Dipl.-Ing. Dr.techn. Schütz Alfred
Dipl.-Ing. Dr.techn. Pfeifer Rudolf Dr.phil. Mrazek
Engelbert Dipl.-Ing. Holzer Walter Dipl.-Ing. Pfeifer
Otto
Fleischmanngasse 9 A-1040 Wien (AT)

**Beschreibung**

Die Erfindung betrifft ein Verfahren zum Herstellen und Stapeln von Bewehrungsmatten für Stahlbeton aus einander kreuzenden und an den Kreuzungspunkten miteinander verschweißten Scharen von Längs- und Querdrähten mit über die Randlängsdrähte überstehenden Querdrahtendteilen, unter Verwendung einer kontinuierlich arbeitenden Gitterschweißmaschine, einer Schere, welche die anfallende Gitterbahn in Matten gewünschter Länge unterteilt, und einer Wende- und Stapelvorrichtung, welche diese Matten abwechselnd ungewendet und gewendet auf einen Stapel ablegt.

Da Bewehrungsmatten in großen Stückzahlen und in einer erheblichen Anzahl von festgelegten Typen produziert und auf Vorrat gehalten werden müssen, stellt sich stets das Problem einer raumsparenden Lagerung dieser Matten in Stapeln.

Es ist seit langem bekannt, jede zweite der aus einer Gitterschweißmaschine austretenden Matten vor dem Ablegen auf einen Mattenstapel zu wenden. Durch diese Maßnahme wird erreicht, daß von der aus der Gitterschweißmaschine austretenden Folge von Matten beispielsweise alle ungeradzahligen Matten mit den Querdrähten unten und den Längsdrähten oben, alle geradzahligen hingegen mit den Längsdrähten unten und den Querdrähten oben im Stapel zu liegen kommen. Bei dieser Art der Stapelbildung können sich abwechselnd gleichartige Drähte, also Längs- bzw. Querdrähte, von jeweils zwei im Stapel unmittelbar übereinanderliegenden Matten in gleicher Ebene nebeneinander anordnen, wodurch die Höhe des Stapels auf die Hälfte jenes Wertes reduziert wird, der sich bei gleicher Lage aller Matten im Stapel ergäbe.

Das Wenden und Stapeln der Matten besorgen meist besondere, automatisch arbeitende Wende- und Stapelvorrichtungen, in welche die von der Gitterschweißmaschine austretenden Matten nacheinander bis zu einem Anschlag eingeschoben werden und welche die Matten abwechselnd ungewendet und gewendet auf den Stapel ablegen.

Matten mit durchwegs geraden Längs- und Querdrähten ordnen sich beim Ablegen auf den Mattenstapel ganz von selbst so, daß die zueinander parallelen, gleichartigen Drähte zweier unmittelbar übereinander abgelegter Matten in der gleichen Ebene zu liegen kommen und nicht etwa Draht auf Draht übereinander liegen bleiben, weil die oberen der übereinander liegenden Drähte zufolge der Schwerkrafteinwirkung längs der Mantelflächen der unteren abgleiten. Beim Stapeln von Bewehrungsmatten, deren überstehende Querdrahtendteile zur Verbesserung der Kraftübertragung zwischen nebeneinander verlegten Matten in der Mattenebene in Form von Schlaufen zu den Randlängsdrähten zurückgebogen sind, ergibt sich hingegen aus der Formgebung dieser Schlaufen ein besonderes Problem. Bei diesen Matten können sich nämlich die Querdrähte nicht mehr ohne weiteres in gleicher Ebene anordnen, weil die Drahtschlaufen übereinander abgelegter Matten ein Abgleiten der Querdrähte aneinander längs ihrer Umfangsflächen verhindern.

Die Erfindung befaßt sich deshalb mit der Aufgabe, bei einem Verfahren der einleitend angegebenen Gattung zum Herstellen und Stapeln von Bewehrungsmatten für Stahlbeton die vorstehend aufgezeigten Schwierigkeiten zu vermeiden.

Erfindungsgemäß wird beim Herstellen von Bewehrungsmatten, bei welchen die überstehenden Querdrahtendteile in der Mattenebene schlaufenförmig zu den Randlängsdrähten zurückgebogen sind, zunächst eine Gitterbahn angefertigt, bei welcher die überstehenden Querdrahtendteile in der gewünschten Länge der Bewehrungsmatten entsprechenden Abschnitten der Gitterbahn in der Bahnebene, bezogen auf die Gittervorschubrichtung, abwechselnd nach vorne bzw. nach hinten zu den Randlängsdrähten der Gitterbahn zurückgebogen sind, diese Gitterbahn wird sodann jeweils zwischen zwei Querdrähten mit in entgegengesetzten Richtungen zurückgebogenen Endteilen durchtrennt und die so erhaltenen Matten werden abwechselnd ungewendet und um ihre Längsachse gewendet auf einen Stapel abgelegt.

Bei dieser Verfahrensweise können sich die Querdrähte benachbarter Matten im Stapel trotz der Schlaufenform ihrer Endteile ohne gegenseitige Behinderung nebeneinander in einer Ebene anordnen, so daß ein ebenso raumsparendes Stapeln möglich ist wie bei Matten mit durchwegs geraden Längs- und Querdrähten.

Nach einer ersten erfindungsgemäßen Verfahrensvariante werden in der Gitterschweißmaschine mit den Längsdrähten gerade Querdrähte zu einer Gitterbahn verschweißt und die über die Randlängsdrähte überstehenden Querdrahtendteile werden anschließend schlaufenförmig zu den Randlängsdrähten zurückgebogen. Hiebei erfolgt das schlaufenförmige Zurückbiegen der Querdrahtendteile mit Hilfe von an die Gitterschweißmaschine angebauten Biegevorrichtungen im Vorschubweg der Gitterbahn.

Nach einer zweiten erfindungsgemäßen Verfahrensvariante werden in der Gitterschweißmaschine Querdrähte mit bereits vorher schlaufenförmig zurückgebogenen Endteilen mit den Längsdrähten zu einer Gitterbahn verschweißt. Das schlaufenförmige Zurückbiegen der Querdrahtendteile erfolgt dabei in von der Gitterschweißmaschine getrennten Biegevorrichtungen oder in an diese Maschine im Zubringerweg der Querdrähte angebauten Biegevorrichtungen.

Bei beiden Verfahrensvarianten werden die schlaufenförmig zurückgebogenen Querdrahtendteile vorteilhaft mit den Randlängsdrähten der Gitterbahn verschweißt.

Die Erfindung wird nun samt weiteren Merkmalen unter Bezugnahme auf die Zeichnungen genauer erläutert. Es zeigen :

Figur 1 eine schematische Seitenansicht und

Figur 2 eine Draufsicht einer Anlage zur Ausübung der ersten erfindungsgemäßen Verfahrensvariante ;

Figur 3 eine schematische Seitenansicht und

Figur 4 eine Draufsicht einer Anlage zur Ausübung der zweiten erfindungsgemäßen Verfahrensvariante ;

Figur 5 einen Querschnitt durch einen raumsparenden Stapel und

Figur 6 eine zugehörige Draufsicht auf einen Randbereich dieses Stapels, wie er nach dem erfindungsgemäßen Verfahren erhalten wird.

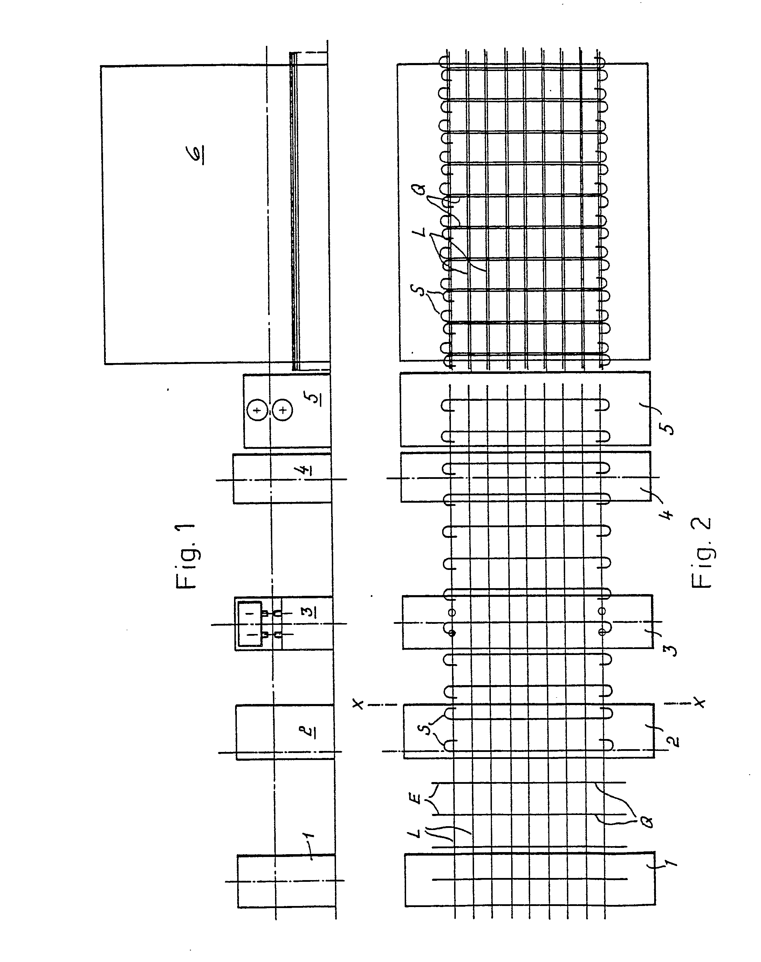

In den Figuren 1 und 2 ist mit 1 eine kontinuierlich arbeitende Gitterschweißmaschine bezeichnet, durch welche Längsdrähte L fortlaufend oder schrittweise von Haspeln abgezogen und in bekannter Weise so mit Querdrähten Q zu einer Gitterbahn zusammengefügt werden, daß die Endteile E der Querdrähte Q seitlich über die Randlängsdrähte der Gitterbahn überstehen.

Anschließend an die Gitterschweißmaschine ist eine Biegevorrichtung 2 vorgesehen, mit deren Hilfe die überstehenden Querdrahtendteile E in der Gitterherstellungsebene in Form von Schlaufen S zu den Randlängsdrähten der Gitterbahn hin zurückgebogen werden. Der Richtungssinn, in dem dieses Zurückbiegen der Querdrahtendteile E erfolgt, wird in den gewünschten Mattenlängen entsprechenden Abschnitten der Gitterbahn umgekehrt. In Figur 2 erkennt man, daß die Endteile der beiden eben in der Biegevorrichtung 2 befindlichen Querdrähte, bezogen auf die Vorschubrichtung der Gitterbahn, nach vorne gebogen wurden, wogegen die Endteile der Querdrähte des bereits aus der Biegeeinrichtung 2 ausgetretenen vorhergehenden Abschnittes der Gitterbahn nach hinten gebogen worden sind.

Vorteilhaft werden die zu den Randlängsdrähten zurückgebogenen Querdrahtendteile mit den Randlängsdrähten verschweißt, wozu hinter der Biegevorrichtung 2 eine Schweißeinrichtung 3 vorgesehen ist.

Die Gitterbahn wird sodann jeweils zwischen zwei benachbarten Querdrähten mit gegensinnig zurückgebogenen Endteilen mittels einer Mattenschere 4 durchtrennt, sobald diese in Figur 2 mit X bezeichnete Stelle der Gitterbahn im Verlauf des Gittervorschubes in den Bereich der Schere 4 gelangt.

Hinter der Schere 4 befindet sich eine Transportvorrichtung 5, welche die von der Gitterbahn abgetrennten Matten in eine Wende- und Stapelvorrichtung 6 einschiebt, die in bekannter Weise abwechselnd eine Matte in der Lage, in welcher sie aus der Mattenschere 4 ausgetreten ist, auf den Mattenstapel ablegt und die nächste Matte vor dem Ablegen auf den Mattenstapel um ihre Längsachse wendet.

In Figur 2 sind in Draufsicht auf den Mattenstapel im Bereich der Wende- und Stapelvorrichtung abgelegte Gittermatten erkennbar, deren Querdrahtendteile z. B. bei den ungeradzahligen Matten im Stapel in Gittervorschubrichtung und bei den geradzahligen Matten entgegen der Gittervorschubrichtung in Form von Schlaufen S zu den Randlängsdrähten der Matten zurückgebogen sind.

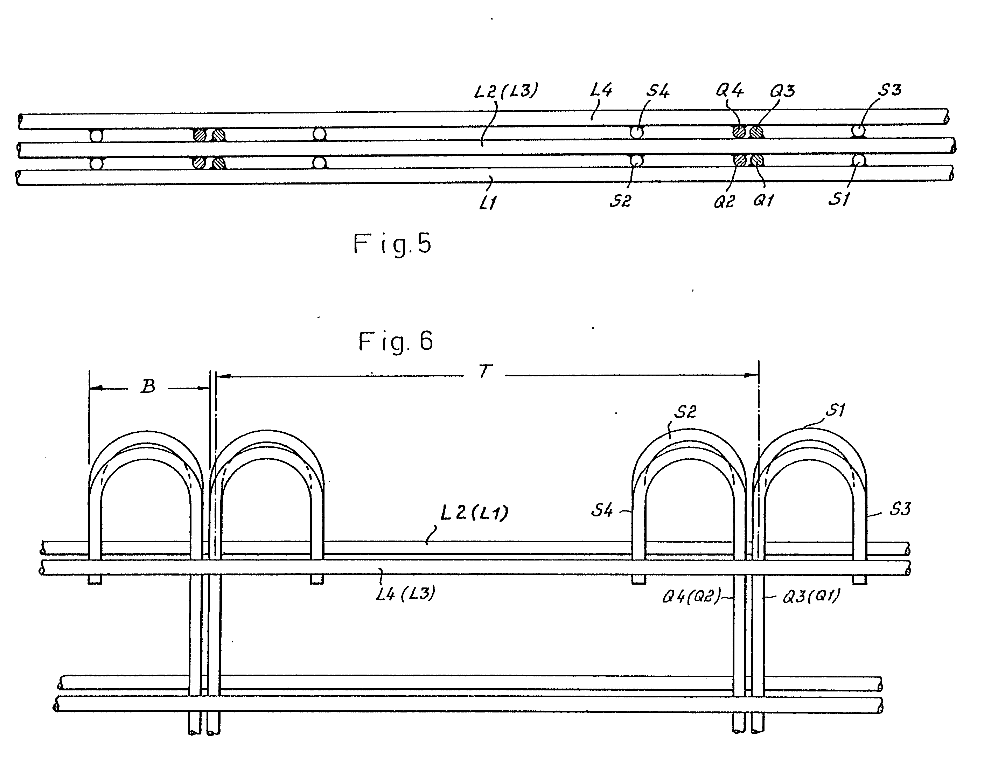

Zur Verdeutlichung dieser Verhältnisse ist in Figur 5 in größerem Maßstab ein Querschnitt in Richtung der Längsdrähte durch einen Stapel von vier Matten dargestellt, deren Längs- und Querdrähte der Reihe nach mit L1 bis L4 bzw. mit Q1 bis Q4 bezeichnet sind, wobei die von den Querdrahtendteilen gebildeten Schlaufen S1 bis S4 mit ihren Endflächen in Erscheinung treten und die Bezugzeichen von durch sichtbare Drähte abgedeckten Drähten in Klammern gesetzt sind. Die Querdrähte Q1, Q2 und die von den Querdrahtendteilen gebildeten Schlaufen S1, S2 der ersten und zweiten Matte liegen, wie in Figur 5 erkennbar ist, in einer gemeinsamen Ebene. Ebenso liegen die Längsdrähte L2 und L3 der zweiten und dritten Matte in einer gemeinsamen Ebene. Die Schlaufen S1, S2 der ersten und zweiten Matte sowie die Schlaufen S3, S4 der dritten und vierten Matte weisen, wie in der Draufsicht nach Figur 6 erkennbar ist, nach entgegengesetzten Richtungen, so daß sie das Eingreifen der Querdrähte Q2 bzw. Q4 der zweiten bzw. vierten Matte zwischen den Querdrähten Q1 bzw. Q3 der ersten bzw. dritten Matte nicht behindern.

Aus Figur 5 ist ersichtlich, daß zur Sicherung der raumsparenden Stapelungsmöglichkeit nur darauf geachtet werden muß, daß die Außenbreite B jeder Schlaufe S kleiner ist als der halbe gegenseitige Abstand T der Querdrähte Q in den Matten.

Um diese Bedingung einzuhalten, können die Querdrähte der Gitterschweißmaschine einzeln zugeführt werden und die Gitterbahn kann bei jedem Vorschubschritt um eine Wegstrecke vorgeschoben werden, die mindestens gleich der doppelten, parallel zur Gitterbahnebene gemessenen Außenbreite B der fertig ausgeformten Schlaufe S eines Querdrahtendteiles E ist.

Eine andere Möglichkeit besteht darin, die Querdrähte der Gitterschweißmaschine paarweise in einem gegenseitigen Abstand zuzuführen, der mindestens gleich der doppelten, parallel zur Gitterbahnebene gemessenen Außenbreite B einer fertig ausgeformten Schlaufe S eines Querdrahtendteiles E ist, und die Gitterbahn bei jedem Vorschubschritt um eine Wegstrecke vorzuschieben, die gleich dem doppelten Querdrahtabstand T ist.

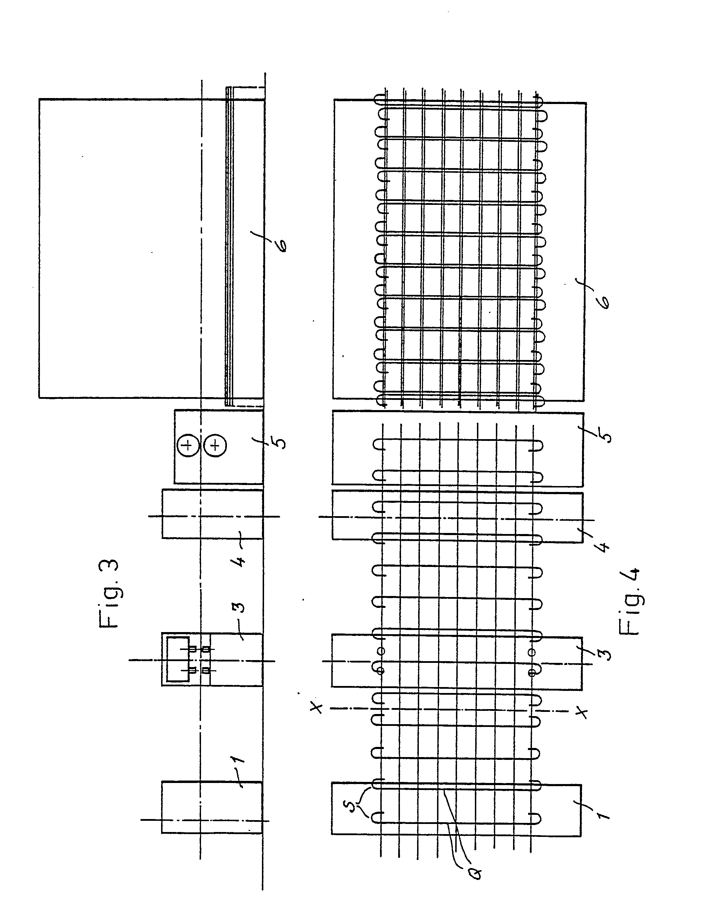

Die zur Ausübung der zweiten Verfahrensvariante bestimmte Anlage nach den Figuren 3 und 4 weist in teilweiser Übereinstimmung mit der Anlage nach den Figuren 1 und 2 eine kontinuierlich arbeitende Gitterschweißmaschine 1, eine Schweißeinrichtung 3 zum Verschweißen der Drahtschlaufen S mit den Randlängsdrähten der aus der Gitterschweißmaschine austretenden Gitterbahn, eine Schere 4, eine Transportvorrichtung 5 und eine Wende- und Stapelvorrichtung 6 auf.

Bei der Anlage nach den Figuren 3 und 4 werden der Gitterschweißmaschine Querdrähte Q mit bereits vorher in Form von Schlaufen S zurückgebogenen Endteilen zugeführt. Die Orientierung dieser Schlaufen S in Bezug auf die Vorschubrichtung der Gitterbahn wird in der gewünschten Mattenlänge entsprechenden Abschnitten umgekehrt und die Gitterbahn wird jeweils an der Stelle X zwischen zwei Querdrähten mit gegensinnig zurückgebogenen Schlaufen mittels der Schere 4 durchtrennt, wobei sich wieder die anhand der Figuren 5 und 6 erläuterte raumsparende Stapelmöglichkeit in der Wende- und Stapelvorrichtung 6 ergibt.

**Patentansprüche**

1. Verfahren zum Herstellen und Stapeln von Bewehrungsmatten für Stahlbeton aus einander kreuzenden und an den Kreuzungspunkten miteinander verschweißten Scharen von Längs- und Querdrähten mit über die Randlängsdrähte überstehenden Querdrahtendteilen, unter Verwendung einer kontinuierlich arbeitenden Gitterschweißmaschine, einer Schere, welche die anfallende Gitterbahn in Matten gewünschter Länge unterteilt, und einer wende- und Stapelvorrichtung, welche die Matten abwechselnd ungewendet und gewendet auf einen Stapel ablegt, dadurch gekennzeichnet, daß beim Herstellen von Bewehrungsmatten, bei welchen die überstehenden Querdrahtendteile in der Mattenebene schlaufenförmig zu den Randlängsdrähten zurückgebogen sind, zunächst eine Gitterbahn angefertigt wird, bei welcher die überstehenden Querdrahtendteile in der gewünschten Länge der Bewehrungsmatten entsprechenden Abschnitten der Gitterbahn in der Bahnebene, bezogen auf die Gittervorschubrichtung, abwechselnd nach vorne bzw. nach hinten zu den Randlängsdrähten der Gitterbahn zurückgebogen sind, daß die Gitterbahn sodann jeweils zwischen zwei Querdrähten mit in entgegengesetzten Richtungen zurückgebogenen Endteilen durchtrennt wird und daß die so erhaltenen Matten abwechselnd ungewendet und um ihre Längsachse gewendet auf einen Stapel abgelegt werden.

2. Verfahren nach Patentanspruch 1, dadurch gekennzeichnet, daß in der Gitterschweißmaschine mit den Längsdrähten gerade Querdrähte zu einer Gitterbahn verschweißt werden und daß die über die Randlängsdrähte überstehenden Querdrahtendteile anschließend schlaufenförmig zu den Randlängsdrähten zurückgebogen werden.

3. Verfahren nach Patentanspruch 1, dadurch gekennzeichnet, daß in der Gitterschweißmaschine Querdrähte mit bereits vorher schlaufenförmig zurückgebogenen Endteilen mit den Längsdrähten zu einer Gitterbahn verschweißt werden.

4. Verfahren nach einem der Patentansprüche 1 bis 3, dadurch gekennzeichnet, daß die schlaufenförmig zurückgebogenen Querdrahtendteile mit den Randlängsdrähten der Gitterbahn verschweißt werden.

5. Verfahren nach einem der Patentansprüche 1 bis 4, dadurch gekennzeichnet, daß die Querdrähte der Gitterschweißmaschine einzeln zugeführt werden und daß die Gitterbahn bei jedem Vorschubschritt um eine Wegstrecke vorgeschoben wird, die mindestens gleich der doppelten, parallel zur Gitterbahnebene gemessenen Außenbreite der fertig ausgeformten Schlaufe eines Querdrahtendteiles ist.

6. Verfahren nach einem der Patentansprüche 1 bis 4, dadurch gekennzeichnet, daß die Querdrähte der Gitterschweißmaschine paarweise in einem gegenseitigen Abstand zugeführt werden, der mindestens gleich der doppelten, parallel zur Gitterbahnebene gemessenen Außenbreite einer fertig ausgeformten Schlaufe eines Querdrahtendteiles ist, und daß die Gitterbahn bei jedem Vorschubschritt um eine Wegstrecke vorgeschoben wird, die gleich dem doppelten Querdrahtabstand ist.

**Claims**

1. Method for producing and stacking reinforcement mats for reinforced concrete, said mats consisting of groups of longitudinal and transverse wires which cross one another and are welded together at the crossing points, with end portions of the transverse wires projecting beyond the edge longitudinal wires, by using a continuously operating grid welding machine, a shear which cuts the produced grid sheet into mats of desired lengths, and a turnover and stacking device which deposits the mats on a stack alternately unreversed and reversed, characterized in that in the production of reinforcement mats in which said projecting end portions of the transverse wires are bent back in the plane of the mat towards the edge longitudinal wires in the shape of loops, first of all a grid sheet is produced in which said projecting end portions of said transverse wires are alternately bent back forwards and rearwards, respectively, relative to the direction of the grid advance in the plane of said sheet towards the edge longitudinal wires of the grid sheet in sections of the grid sheet corresponding to the desired length of said reinforcement mats, in that the grid sheet is cut thereafter between two transverse wires having end portions bent back in opposite direction, and in that the mats thus obtained are deposited onto a stack alternately unreversed and reversed around their longitudinal axes.

2. Method according to claim 1, characterized in that straight transverse wires are welded to the longitudinal wires in the welding machine to form a grid sheet and in that the end portions of the transverse wires projecting over the edge longitudinal wires are bent back thereafter towards said edge longitudinal wires in the shape of loops.

3. Method according to claim 1, characterized in that in the grid welding machine transverse wires having end portions bent back in the form of loops already beforehand are welded to the longitudinal wires to form a grid sheet.

4. Method according to one of the claims 1 to 3, characterized in that the end portions of the transverse wires bent back in the shape of loops are welded to the edge longitudinal wires of the grid sheet.

5. Method according to one of the claims 1 to 4, characterized in that the transverse wires are fed individually to the welding machine and in that the grid sheet with each advance step is advanced by a distance which is at least equal to the double external width of the finished loop of one transverse wire end portion, measured in parallel to the plane of the grid sheet.

6. Method according to one of the claims 1 to 4, characterized in that the transverse wires are fed to the welding machine in pairs in a distance to each other which is at least the double external width of a finished loop of one transverse wire end portion measured in parallel to the grid sheet, and in that the grid sheet is advanced in each advance step by a distance equal to the double transverse wire distance.

**Revendications**

1. Procédé de fabrication et d'empilage de grillages d'armature pour béton armé formés de groupes de fils longitudinaux et transversaux, des parties des fils transversaux faisant saillie au-delà des fils longitudinaux de rives, croisés et soudés les uns aux autres aux points de croisement, au moyen d'une soudeuse de treillis travaillant en continu, d'une cisaille qui divise la nappe de treillis produite en grillages de la longueur souhaitée et d'un dispositif d'empilage et de retournement qui dépose ces grillages alternativement à l'endroit et à l'envers sur une pile, caractérisé en ce que lors de la fabrication de grillages d'armature dans lesquels les parties d'extrémité de fils transversaux saillantes sont recourbées dans le plan du grillage en forme de boucles vers les fils longitudinaux de rives, on confectionne d'abord une nappe de treillis dans laquelle les parties d'extrémité de fils transversaux saillantes sont recourbées, dans des sections de la nappe de treillis correspondant à la longueur souhaitée des grillages d'armature, dans le plan de la nappe, par rapport à la direction d'avancement du treillis, alternativement vers l'avant et vers l'arrière vers les fils longitudinaux de rives de la nappe de treillis, puis on sectionne cette nappe de treillis chaque fois entre deux fils transversaux comportant des parties d'extrémité recourbées en sens opposés, et on dépose les grillages ainsi obtenus alternativement à l'endroit et à l'envers par retournement autour de leur axe longitudinal sur une pile.

2. Procédé suivant la revendication 1, caractérisé en ce que des fils transversaux rectilignes sont soudés aux fils longitudinaux dans une soudeuse de treillis en une nappe de treillis et les parties d'extrémité des fils transversaux qui dépassent des fils longitudinaux de rives sont ensuite recourbées en forme de boucles vers les fils longitudinaux de rives.

3. Procédé suivant la revendication 1, caractérisé en ce que dans la soudeuse de treillis, des fils transversaux comportant des parties d'extrémité recourbées déjà préalablement en forme de boucles, sont soudés aux fils longitudinaux en une nappe de treillis.

4. Procédé suivant l'une quelconque des revendications 1 à 3, caractérisé en ce que les parties d'extrémité de fils transversaux recourbées en forme de boucles sont soudées aux fils longitudinaux de rives de la nappe de treillis.

5. Procédé suivant l'une quelconque des revendications 1 à 4, caractérisé en ce que les fils transversaux de la soudeuse de treillis sont fournis un par un et la nappe de treillis est avancée à chaque pas d'avancement d'une distance au moins égale au double de la largeur extérieure de la boucle terminée d'une partie d'extrémité de fil transversal mesurée parallèlement au plan de la nappe de treillis.

6. Procédé suivant l'une quelconque des revendications 1 à 4, caractérisé en ce que les fils transversaux sont fournis par paires à la soudeuse de treillis à une distance réciproque qui est au moins égale au double de la largeur extérieure d'une boucle terminée d'une partie d'extrémité de fil transversal, mesurée parallèlement au plan de la nappe de treillis, et la nappe de treillis est avancée à chaque pas d'avancement d'une distance égale au double de l'espacement des fils transversaux.

Fig. 1

Fig. 2

0 089 945

Fig. 3

Fig. 4

0 089 945

L2(L3)  L4  S4  Q4  Q3  S3

L1  S2  Q2  Q1  S1

Fig. 5

Fig. 6

B  T

S2  S1

L2(L1)

S4  S3

L4(L3)  Q4(Q2)  Q3(Q1)